# EUROPÄISCHE PATENTSCHRIFT

(11) **EP 1 236 567 B1**
(45) Veröffentlichungstag und Bekanntmachung des Hinweises auf die Patenterteilung: **09.11.2005**
(21) Anmeldenummer: 02003846.9
(22) Anmeldetag: 20.02.2002
(51) Int. Cl.: B32B 27/12, B32B 27/36, A41D 31/02, C08G 63/672, C09J 167/02

(54) **Verfahren zur Verklebung einer Copolyetheresterfolie mit Copolyester**
Process for adhesive bonding copolyetherester film with copolyester
Procédé de collage d'une feuille en copolyétherester avec un copolyester

(30) Priorität: 28.02.2001 DE 10109622
(43) Veröffentlichungstag der Anmeldung: 04.09.2002
(73) Patentinhaber: EMS-Chemie AG, 7013 Domat/Ems (CH)
(72) Erfinder: Kinkelin, Eberhard, Dr., 7000 Chur (CH); Kemper, Peter, 7418 Tomils (CH); Spindler, Jürgen, Dr., 7013 Domat/Ems (CH); Poessnecker, Gerhard, Dr., 7014 Trin (CH)
(74) Vertreter: Becker Kurig Straus

(56) Entgegenhaltungen:
- EP-A- 0 560 630
- US-A- 5 447 783
- US-A- 5 529 830
- US-A- 5 767 226

## Beschreibung

Die vorliegende Erfindung betrifft die Verklebung von atmungsaktiven Folien als Funktionsschichten und Substraten aus Geweben oder Gewirken mit Hilfe von Copolyestern.

Die Erfindung betrifft insbesondere ein Verfahren zum Herstellen einer waschbeständigen Verklebung zwischen einer wasserundurchlässigen und wasserdampfdurchlässigen Folie auf Copolyetheresterbasis und mindestens einem Substrat auf Polyesterbasis aus einem Gewebe oder Gewirke zum Erzielen eines sortenreinen Textilverbundes.

Der erfindungsgemäße Textilverbund wird zur Herstellung von Wetterschutzbekleidung, wasserdichten Zelten, Schuhen oder Handschuhen eingesetzt.

Die Erfindung befaßt sich speziell mit der Verklebung von wasserdichten, ultraleichten, ultradichten, extrem dehnbaren, aber wasserdampfdurchlässigen, d.h. atmungsaktiven nichtporösen Membranen bzw. Folien auf der Basis von Copolyetherestern (wie z.B. Sympatex®, Marke der Sympatex-Technologies) und textilen Substraten aus Polyester durch Herstellung eines Laminats, inbesondere einer 2-Schichtfolie, bestehend aus der atmungsaktiven Folie und einer Folie aus einem speziellen Copolyester und der Verklebung dieses Laminats (als Funktionsschicht) mittels eines Copolyester-Schmelzklebers mit dem Substrat und insbesondere dem textilen Polyestersubstrat zum Erzielen eines sortenreinen Textilverbunds, der durchgehend aus Polyester besteht, voll recyclierbar und beständig gegenüber Waschen bei 60° C ist, und daher nach mehrmaligem Waschen nicht delaminiert.

Wasserdichte und wasserdampfdurchlässige (nicht-poröse) Membranen sind bereits sehr zahlreich in der Literatur und in Patentdokumenten beschrieben worden. Spezielle wasserdichte und wasserdampfdurchlässige Materialien auf der Basis von Copolyetherestern wurden 1983 erstmals in US-A-4,493,870 beschrieben. Diese Materialien werden heute unter der Bezeichnung Sympatex®, einer Marke der Sympatex-Technologies, weltweit eingesetzt. Sympatex® ist eine monolithische Membran, die sicherstellt, daß die erwähnten Eigenschaften im Hinblick auf Wasserdichtheit intakt bleiben und die klimafreundlichen Eigenschaften des äußeren Materials nicht vermindert werden. Sympatex® kann sogar bis zu 300 % in jede Richtung gereckt werden. Die Sympatex®-Membran muß nur 1/100 mm dick sein. Das Prinzip der Atmungsaktivität kann dadurch erklärt werden, daß innerhalb und außerhalb der Membran ein unterschiedliches Klima herrscht, das durch verschiedene Wasserdampfkonzentrationen und -temperaturen charakterisiert wird. So entsteht ein Druckgefälle, welches die treibende Kraft für den Wasserdampftransport bildet. In der Membran sind hydrophile Bausteine eingearbeitet. Durch diese werden die Wasserdampfmoleküle angezogen und von Baustein zu Baustein wie in einem Billard-System in Richtung des niedrigen Drucks durch die Membrane nach außen transportiert.

Weiterhin beschreibt DE 38 83 948 T2 eine feuchtigkeitsfeste Folie aus einer hydrophilen Copolyester-Elastomerschicht und einer hydrophoben Copolyester-Elastomerschicht, die aneinander gebunden sind. Wenn die hydrophobe Schicht einen ausreichend niedrigen Schmelzpunkt hinsichtlich dem Schmelzpunkt von der hydrophilen Schicht aufweist, kann sie zur Verklebung an textile Materialien wie Polyamid, Polyethylenterephthalat, Baumwolle und Cellulosetriacetat verwendet werden. Hierbei ist jedoch die vorstehend erwähnte Sortenreinheit des gesamten Laminats nicht gegeben.

Es ist weiterhin schon lange bekannt, daß Polyetherester-Folien mit textilen Einlagen oder Oberstoffen aus Polyester nur mittels reaktiven Polyurethansystemen zu verkleben sind (vgl. EP 0 382 801 B1, Spalte 3, Z. 32-42). Zwar lassen sich Laminate aus der atmungsaktiven Folie und einem Polyestertextil auch mit Hilfe eines Schmelzklebers auf Basis von Polyestern oder von Copolyestern herstellen. Diese Laminate sind aber nicht beständig gegenüber mehrmaliger Wäsche bei 60° C. Diese Eigenschaft ist daher bislang nur durch eine Verklebung mit reaktiven Polyurethansystem zu erreichen. Durch den Einsatz eines Polyurethanklebers ist allerdings die Sortenreinheit des gesamten Laminats und damit auch die vollständige Recyclierbarkeit nicht mehr gegeben.

Im Jahr 2000 wurde von der Textilindustrie ein neuer Standard entwickelt, das sog. bluesign®-Label.

Kernstück dieses Standards bzw. Konzeptes ist eine höchstmögliche Schadstofffreiheit und Ressourcenschonung von der textilen Faser bis hin zum Knopf und über den gesamten Produktionsprozeß eines Bekleidungsteils. Ein Aspekt dieses Konzeptes ist das (chemische) Recycling bei der Verwendung von polymeren Fasern, das nur durch eine durchgängige Sortenreinheit der bei der Bekleidung verwendeten Materialien zu erreichen ist.

Bezogen auf die Verwendung einer atmungsaktiven Folie bzw. Membran in der Bekleidung bedeutet dies, daß alle Teile aus Polyester sein müssen, aber auch alle Stoffe, die zum Verbund benötigt werden, ebenfalls aus Polyester bestehen müssen. Diese Forderungen sind bisher nicht erfüllbar, da die Waschbeständigkeit eines Copolyesterklebers für die Verklebung von atmungsaktiver Folie aus Copolyetherester und Polyester-Textil nicht gegeben ist. Bei der Verwendung eines reaktiven Polyurethan-Klebers ist die Sortenreinheit nicht mehr gegeben und die Forderungen des bluesign®-Labels sind nicht erfüllt.

Die Technik des Verklebens mit einem Schmelzkleber ist wohl bekannt. Der Schmelzkleber wird auf bestimmte Weise auf ein Substratteil aufgebracht, anschließend aufgeschmolzen und unter Druck mit dem zweiten Substrat verbunden. Der Auftrag des Schmelzklebers kann entweder aus der Granulatform über einen "Hotmelt"-Auftrag oder aus der Pulverform mit den bekannten Verfahren der Streu-, Doppelpunkt-, Pasten- oder Pastenpunktbeschichtung erfolgen.

Ein weiteres Verfahren ist der Auftrag über eine umgewandelte Form des Schmelzklebers, wie z.B. als Folie oder als Web.

Weiterhin können auch die Gewebe oder Gewirke schmelzklebende Bindefasern enthalten. So beschreibt die DE 38 26 089 A1 einen Vliesstoff, der mit klebefähigen Bindefasern angereichert ist, die einen Schmelzklebekontakt mit der wasserdichten, wasserdampfdurchlässigen Folie herstellen. Dabei können die Bindefasern jedoch auch in größeren Flächenbereichen zusammenschmelzen.

Bei der Verklebung einer wasserdampfdurchlässigen Folie kommt allerdings nur die Technik der punktuellen Verklebung in Frage, da bei vollflächiger Verklebung die speziellen Eigenschaften der Folie nicht mehr gewährleistet sind.

Ungeachtet des Auftragsverfahrens zeigen aber alle Verklebungen zwischen einer Copolyetheresterfolie und einem Textil aus Polyester mit Hilfe eines Schmelzklebers auf Copolyesterbasis zwar eine gute Originalhaftung, aber durchwegs eine ungenügende Haftung nach mehrmaligem Waschen.

Aufgabe der vorliegenden Erfindung ist es daher, eine waschbeständige Verklebung von Folien auf der Basis von Copolyetherestern mit textilem Gewebe auf der Basis von Polyestern mit Hilfe eines Schmelzklebers auf der Basis von Copolyestern zu bewerkstelligen.

Diese Aufgabe wird durch das Verfahren gemäß Anspruch 1 sowie durch den Textilverbund gemäß Anspruch 8 sowie durch die Verwendungen gemäß Anspruch 9 gelöst.

In den Unteransprüchen sind vorteilhafte Ausführungsformen der Erfindung enthalten.

Unerwarteterweise haben die Erfinder der vorliegenden Anmeldung ein Verfahren gefunden, um die Sortenreinheit eines textilen Verbundes zu gewährleisten, aber gleichzeitig eine sehr gute Waschbeständigkeit zu erreichen.

Wird gemäß einer Ausführungsform der Erfindung statt der reinen atmungsaktiven Folie z.B. aus Sympatex®, etc. eine 2-Schicht-Folie, bestehend aus der atmungsaktiven Folie (d) und einer Schicht eines chemisch verwandten Copolyesterschmelzklebers (c), eingesetzt, so läßt sich diese 2-Schicht-Folie mit Hilfe der bekannten Klebetechniken mit einem Polyestersubstrat (a), welches insbesondere eine textile Einlage oder Oberstoff oder Ober- und Futterstoff sein kann, verkleben, ohne daß die sehr gute Originalhaftung nach mehrmaligem Waschen bei 60° C nachläßt.

Die Herstellung einer 2-Schicht-Folie aus der atmungsaktiven Folie und der Schicht aus dem Copolyesterschmelzkleber (Laminat) ist durch Coextrusion von zwei Materialien als Blasfolie oder auch als Flachfolie möglich. Ein anderer Weg ist die Kaschierung einer Schmelzklebefolie auf die atmungsaktive Folie.

Das im erfindungsgemäßen Verfahren eingesetzte Laminat (e) kann als Zweischichtlaminat oder als Dreischichtlaminat ausgebildet sein. Das Zweischichtlaminat ist insbesondere ein Oberstofflaminat, ein Insertlaminat und/oder ein Futterlaminat. Bei dem Oberstofflaminat ist eine Seite des Oberstoffes direkt mittels der eingebrachten chemisch verwandten Schmelzklebefolie auf Basis hydrophiler Copolyetherester mittels eines Schmelzklebers direkt mit der Membrane verbunden. Lose darunter liegt der Futterstoff.

Bei Insertlaminaten wird die Sympatex®-Membrane mit einem Textilträger wie z.B. einem Vlies oder einer Wirkware mit einer dazugegebenen chemisch verwandten Copolyesterschmelzklebeschicht laminiert und hängt lose zwischen Oberstoff und Futterstoff. Diese Variante wird wegen der großen Gestaltungsfreiheit bzgl. der Oberstoffauswahl und Konstruktion vorwiegend in modischer Kleidung eingesetzt.

Bei Futterlaminaten wird der Futterstoff (Gewebe, Gewirke, Vlies) auf der linken Seite mit der Membran mittels der chemisch verwandten Copolyesterschmelzkleberschicht mittels punktueller Schmelzklebeverbindung verbunden. Der Oberstoff liegt dabei lose darüber. Besonders beliebt ist dieses Laminat für extrem leichte und weichfließende Jacken.

Bei dem erfindungsgemäßen Dreilagenlaminat (e) ist die Sympatex®-Membran fest mit dem Ober- und Futterstoff über den hydrophilen Copolyetherester verbunden. Dreischichtlaminate sind robust und langlebig und werden daher insbesondere bei besonders strapazierfähiger Bekleidung eingesetzt.

Während die Dicke der wasserundurchlässigen und wasserdampfdurchlässigen Folie (d) zwischen 5 und 50 µm liegt, weist die zulaminierte Copolyesterfolie (c) aus einem Schmelzkleber auf Basis hydrophiler Copolyetherester eine Dicke von 5 bis 80 µm, insbesondere 5 bis 35 µm auf.

Das Schmelzklebermaterial, welches erfindungsgemäß für die zulaminierte Schicht (c) eingesetzt werden soll, muß, um die Wasserdampfdurchlässigkeit des ganzen Verbundes zu gewährleisten, chemisch eng der eingesetzten atmungsaktiven Folie auf Basis Polyetherester verwandt sein. Bei diesen Schmelzklebern handelt es sich um hydrophile Copolyetherester aus Terephthalsäure als einziger Disäurekomponente und einem Diolgemisch aus Butandiol, Di- und/oder Triethylenglykol und 2 bis 10 Mol-%, bezogen auf die Gesamtsäure- und Gesamtdiolmenge von jeweils 100 % und einer höhermolekularen Polyethylenglykolkomponente mit einer Molmasse von 600-4000 g/mol. Die Schmelzpunkte derartiger Copolyetherester liegen zwischen 90 und 190°C. Der Butandiolgehalt ist weniger als 75 Mol-%. Der Anteil an Diethylenglykol liegt zwischen 5 und 60 Mol-%. Der Anteil an Triethylenglykol liegt zwischen 0 und 40 Mol-%. Besonders bevorzugt liegt der molare Anteil an Butandiol zwischen 40 und 70 Mol-%, bezogen auf die Gesamtdiolmenge von 100 Mol-%. In einer besonders bevorzugten Ausführungsform liegt der molare Anteil an Diethylenglykol zwischen 10 und 50 Mol-% und der molare Anteil an Triethylenglykol vorzugsweise zwischen 0 und 35 Mol-%, bezogen auf die Gesamtdiolmenge von 100 Mol-%. Bei einem gleichzeitigen Einsatz von Diethylenglykol und Triethylenglykol ist das molare Verhältnis von Diethylenglykol zu Triethylenglykol vorzugsweise zwischen 5:1 und 1:3. Zur Erhöhung der Schmelzviskosität der Copolyetheresterschmelzklebemassen kann ein drei- oder mehrbindiges Diol von höchstens 2 Mol-%, bezogen auf die Gesamtdiolmenge, eingesetzt werden. Die Schmelzviskosität der Copolyetherester, gemessen bei 190° C und 2,16 kg Belastung nach ISO/DIN 1133, liegt nicht unter 100 Pas, vorzugsweise nicht unter 200 Pas. Als Diolkomponente für die hydrophilen Copolyetherester kommt insbesondere ein molarer Anteil an Butandiol von 45-70 Mol-%, ein Anteil an Diethylenglykol von 26-50 Mol-% und ein Anteil an einer höhermolekularen Polyethylenglykolkomponente mit einer Molmasse von 600-4000 g/mol von 4 bis 8 Mol-% in Betracht.

Als Copolyetherester für die wasserundurchlässige und wasserdampfdurchlässige Folie oder Membran (d) werden erfindungsgemäß Copolyetherester ausgewählt, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 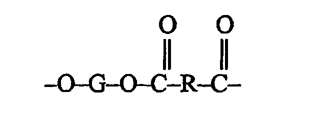 und die kurzkettigen Estereinheiten der Formel 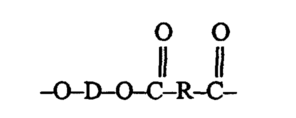 entsprechen, worin
G einen zweiwertigen Rest darstellt, der nach der Entfernung von endständigen Hydroxylgruppen aus mindestens einem langkettigen Glykol eines mittleren Molekulargewichts von 600 bis 6000 und eines Atomverhältnisses von Kohlenstoff zu Sauerstoff von zwischen 2, 0 und 4,3 zurückbehält, wobei mindestens 20 Gew.-% des langkettigen Glykols ein Atomverhältnis von Kohlenstoff zu Sauerstoff zwischen 2,0 und 2,4 besitzen und 15 bis 50 Gew.-% des Copolyetheresters ausmachen,
R einen zweiwertigen Rest darstellt, der nach der Entfernung von Carboxylgruppen aus mindestens einer Dicarbonsäure eines Molekulargewichts von weniger als 300 zurückbleibt, und
D einen zweiwertigen Rest darstellt, der nach der Entfernung von Hydroxylgruppen aus mindestens einem Diol eines Molekulargewichtes von weniger als 250 zurückbleibt, wobei mindestens 80 Mol-% der verwendeten Dicarbonsäure aus Terephthalsäure oder ihren esterbildenden Äquivalenten und mindestens 80 Mol-% des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildende Äquivalente darstellt, und des Diols mit einem kleineren Molekulargewicht, das kein 1,4-Butandiol oder dessen esterbildende Äquivalente darstellt, höchstens 20 % beträgt und die kurzkettigen Estereinheiten 40 bis 80 Gew.-% des Copolyetheresters betragen können.

Geeignete Copolyetherester sind aber in EP 0 382 801 B1 beschrieben, auf die in diesem Zusammenhang bezug genommen wird.

Die zweite Schicht der Verbundfolie, bzw. die zukaschierte Schmelzklebefolie muß außerdem relativ hochschmelzend sein, um ein Aufschmelzen der 2-Schicht-Folie bzw. des Laminats bei der Verklebung mit dem Polyesteroberstoff zu vermeiden. Diese Verklebung darf nicht vollflächig stattfinden, um die Wasserdampfdurchlässigkeit nicht herabzusetzen. Deshalb wird hier vorzugsweise die Technik des Pastenpunktauftrags gewählt, wobei aber auch Pulverpunktauftrag oder Streuauftrag in Frage kommen. Als Schmelzkleber dient dabei ein Copolyesterpulver mit Schmelzpunkt von maximal 140° C, insbesondere von ca. 120°C, um die Verarbeitungstemperatur unter der Schmelztemperatur der 2-Schicht-Folie oder Verbundfolie zu halten. Als Copolyesterschmelzkleber kann insbesondere Griltex® 9E der Firma EMS-Griltech, Domat/Ems, Schweiz, in Betracht kommen.

Das Substrat (a), das insbesondere ein Oberstoff sein kann, muss nicht zwangsweise Polyester sein. Bei anderer Beschaffenheit ist zwar die Sortenreinheit nicht gegeben, aber das vorliegende erfindungsgemäße Verfahren bietet den Vorteil, dass die Laminierung zwischen Copolyetheresterfolie (c) und dem Substrat (a) nicht direkt erfolgen muss, wie bei Verwendung eines reaktiven Polyurethanklebers notwendig, sondern dass das beschichtete Substrat in einem späteren Arbeitsgang mit der Zweischichtfolie oder dem Folienlaminat verklebt werden kann.

Der gemäß dem vorstehenden Verfahren hergestellte Textilverbund, der mindestens ein Substrat (a) aus einem Gewebe oder Gewirke und einer wasserundurchlässigen, wasserdampfdurchlässigen Folie (d) in Kombination mit mindestens einer Copolyesterfolie (c) aus einem Schmelzkleber auf Basis hydrophiler Copolyetherester in Form eines Laminats (e) enthält, wird insbesondere zur Herstellung von Wetterschutzbekleidung, wasserdichten Zelten, Schuhen oder Handschuhen verwendet, welche eine Außenschicht, eine Funktionsschicht und eine Innenschicht aufweisen, wobei das Laminat (e) als Funktionsschicht dient.

In den folgenden Beispielen wird das erfindungsgemäße Verfahren näher erläutert. Als Kriterium für die Güte der Verklebung wurden Originalhaftung und die Haftung nach 5-maliger Wäsche bei 60° C nach DIN 53920 bestimmt. Außerdem wurde die Wasserdampfdurchlässigkeit nach ASTM E-96-66 vor und nach dem Waschen bei 60° C bestimmt.

### Beispiel 1

In einem 10-1-Veresterungsreaktor, versehen mit Temperaturfühler, Rührer, Rückflußkolonne und Destillationsbrücke werden 1,37 kg (1,52 Mol) Butandiol, 0,98 kg (0,93 Mol) Diethylenglykol und 0,89 kg (0,15 Mol) Polyethylenglykol mit einem mittleren Molekulargewicht von 600 vorgelegt und bei 140°C unter einer während der ganzen Reaktion aufrechtgehaltenen Stickstoffatmosphäre aufgeschmolzen. Unter Rühren werden dann 3,08 kg (1,85 Mol) Terephthalsäure und 3 g Veresterungskatalysator zugegeben. Nach schrittweiser Erhöhung der Innentemperatur auf 235° C wird die Reaktion solange fortgesetzt, bis kein Destillat mehr entsteht. Anschließend werden erneut 6 g Veresterungskatalysator und 3 g Hitzestabilisator zugegeben. Die Temperatur wird auf 250° C erhöht und schrittweise Vakuum angelegt, bis ein Endvakuum von < 1 mbar erreicht ist. Die Kondensation wird mindestens 2 Stunden fortgesetzt, bis die gewünschte Viskosität erreicht ist.

Der erhaltene Copolyetherester-Schmelzkleber hat nach 12-stündiger Trocknung bei 60° C einen Schmelzpunkt von ca. 157° C, einen TG von ca. 0° C und eine Schmelzviskosität, gemessen bei 190° C und 2,16 kg Belastung, von 400 Pa*s.

### Beispiel 2

Auf einer Flachfolienanlage (Hersteller: Firma Collin, Ebersberg, Deutschland) wurde eine 2-Schichtfolie hergestellt aus Sympatex® (Marke der Sympatex-Technologies) und dem Schmelzkleber aus Beispiel 1. Jede Schicht hat eine Dicke von ca. 25 µm.

### Beispiel 3

Eine Folie aus Sympatex® (Marke der Sympatex-Technologies) wurde mit einer Folie aus dem Schmelzkleber aus Beispiel 1 laminiert. Die Schmelzkleberfolie wurde auf einer Flachfolienanlage (Hersteller: Firma Collin, Ebersberg, Deutschland) mit einer Dicke von 25 µm hergestellt. Die Sympatexfolie wurde mit der erfindungsgemäßen Schmelzkleberfolie auf einer Meyerpresse bei 155° C unter einem Druck von 5 N/cm² während 8 Sekunden verpreßt.

### Beispiel 4

Ein handelsüblicher Polyester-Oberstoff und die 2-Schichtfolie aus Beispiel 2 wurden mit einem Copolyester-Schmelzkleber (Griltex 9E der EMS-Griltech) auf der Basis modifiziertes Polybutylenterephthalat mit einem Schmelzpunkt von 119° C mittels Pulverpunktbeschichtung verklebt. Dabei wurde der Polyesteroberstoff mit der Schmelzkleberseite der 2-Schichtfolie verklebt. Der Copolyester-Schmelzkleber wurde in der Pulverfraktion 80-200 µm mit einem Auflagegewicht von 12 g/m² auf den Oberstoff aufgebracht und angesintert. Die Verklebung mit der 2-Schichtfolie erfolgte auf einer Meyerpresse bei 135° C, einem Druck von 5 N/cm² und einer Verweilzeit von 12 Sekunden.

### Beispiel 5

Ein handelsüblicher Polyester-Oberstoff und das Folienlaminat aus Beispiel 3 wurden mit einem Copolyester-Schmelzkleber (Griltex® 9E der Firma EMS-Griltech, Domat/Ems, Schweiz) auf der Basis modifiziertes Polybutylenterephthalat mit einem Schmelzpunkt von 119°C mittels Pulverpunktbeschichtung verklebt. Dabei wurde der Polyesteroberstoff mit der Schmelzkleberseite des Folienlaminats verklebt Der Copolyester-Schmelzkleber wurde in der Pulverfraktion 80-200 µm mit einem Auflagegewicht von 12 g/m² auf den Oberstoff aufgebracht und angesintert. Die Verklebung mit dem Folienlaminat erfolgte auf einer Meyerpresse bei 135° C, einem Druck von 5 N/cm² und einer Verweilzeit von 12 Sekunden.

### Beispiel 6

Als Vergleich wurde ein handelsüblicher Polyester-Oberstoff und eine handelsübliche Folie Sympatex (Marke der Sympatex-Technologies) mit einem Copolyester-Schmelzkleber (Griltex® 9E der Fa. EMS-Griltech, Domat/Ems, Schweiz) mittels Pulverpunktbeschichtung verklebt. Der Copolyester-Schmelzkleber wurde in der Pulverfraktion 80-200 µm mit einem Auflagegewicht von 12 g/m² auf den Oberstoff aufgebracht und angesintert. Die Verklebung erfolgte auf einer Meyerpresse bei 135° C, einem Druck von 5 N/cm² und einer Verweilzeit von 12 Sekunden.

### Beispiel 7

Von den Textilverbunden der Beispiele 4-6 wurde die Originalhaftung gemessen, sowie die Haftung nach 5-maliger Wäsche bei 60°C. Außerdem wurde die Wasserdampfdurchlässigkeit nach ASTM vor und nach der Wäsche ermittelt.

Zur Messung der Haftkraft wurden 5 cm breite Textilverbunde in eine Zugmaschine eingespannt. Die Prüfparameter waren bei allen Messungen konstant.

| | |
|---|---|
| Prüfgeschwindigkeit | 100 mm/min |
| Prüfkörperbreite | 50 mm |
| Prüfstrecke | 80 mm |
| Vorkraft | 0 N |
| Prüftemperatur | 25° C |

In Tabelle 1 sind die Ergebnisse dargestellt.

**Tabelle 1**

| | **Beispiel 4** | **Beispiel 5** | **Vergleichs- beispiel 6** |
|---|---|---|---|
| Originalhaftung [N/5cm] | >12 | >12 | >12 |
| | (Substratriß) | (Substratriß) | (Substratriß) |
| Haftung nach 5x Wäsche bei 60° C [N/5cm] | > 12 | > 12 | **Delaminierung** |
| | (Substratriß) | (Substratriß) | |
| Wasserdampfdurchlässigkeit [g/m² in 24 h] | 2731 | 2699 | 2745 |
| Wasserdampfdurchlässigkeit nach 5x Wäsche bei 60° C [g/m² in 24 h] | 2517 | 2509 | **Delaminierung** |

## Patentansprüche

1. Verfahren zum Herstellen einer waschbeständigen Verklebung zwischen einer wasserundurchlässigen und wasserdampfdurchlässigen Folie auf Copolyetheresterbasis (d) und mindestens einem Substrat (a) auf Polyesterbasis aus einem Gewebe oder Gewirke, zum Erzielen eines sortenreinen Textilverbundes mit einer Waschbeständigkeit bei 60° C bei mindestens fünfmaliger Wäsche, **dadurch gekennzeichnet, daß** man vor der Verklebung mit dem Substrat (a) die wasserundurchlässige und wasserdampfdurchlässige Folie auf Copolyetheresterbasis (d) mit mindestens einer Copolyesterfolie aus einem Schmelzkleber auf Basis hydrophiler Copolyetherester (c) zu einem Laminat (e) verarbeitet, und dieses Laminat (e) mit dem Substrat (a) mit Hilfe eines Schmelzklebers auf Copolyesterbasis (b) verklebt, der eine maximale Anwendungstemperatur von 140° C aufweist,
wobei man als Copolyesterteil der Folie (c) oder als zulaminierte Copolyesterfolie (c) eine Folie aus einem Schmelzkleber mit einem Schmelzpunkt von 90-190° C auf Basis hydrophiler Copolyetherester auswählt, wobei als Bausteine für diesen Copolyetherester Terephthalsäure als einzige Säurekomponente eingesetzt wird und deren molarer Anteil, bezogen auf die Gesamtsäuremenge, bei 100 Mol-% liegt, und als Diolkomponente eine Kombination aus Butandiol, Diethylenglykol und/oder Triethylenglykol eingesetzt wird,
wobei der Butandiolgehalt weniger als 75 Mol-% beträgt, der Diethylenglykolanteil zwischen 5 und 60 Mol-% liegt, der Anteil an Triethylenglykol zwischen 0 und 40 Mol-% liegt und mindestens 2 bis 10 Mol-% eines höhermolekularen Polyethylenglykols, mit einer Molmasse von 600 bis 4000 g/Mol, bezogen auf die Gesamtsäure- und Gesamtdiolmenge von 100 Mol-%, vorhanden ist,
wobei man als der Copolyetherester für die wasserundurchlässige und wasserdampfdurchlässige Folie (d) oder Membran Copolyetherester auswählt, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 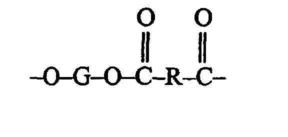 und die kurzkettigen Estereinheiten der Formel 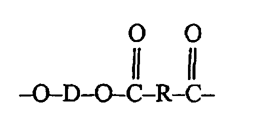 entsprechen, worin
G einen zweiwertigen Rest darstellt, der nach der Entfernung von endständigen Hydroxylgruppen aus mindestens einem langkettigen Glykol eines mittleren Molekulargewichts von 600 bis 6000 und eines Atomverhältnisses von Kohlenstoff zu Sauerstoff von zwischen 2, 0 und 4,3 zurückbehält, wobei mindestens 20 Gew.-% des langkettigen Glykols ein Atomverhältnis von Kohlenstoff zu Sauerstoff zwischen 2,0 und 2,4 besitzen und 15 bis 50 Gew.-% des Copolyetheresters ausmachen,
R einen zweiwertigen Rest darstellt, der nach der Entfernung von Carboxylgruppen aus mindestens einer Dicarbonsäure eines Molekulargewichts von weniger als 300 zurückbleibt, und
D einen zweiwertigen Rest darstellt, der nach der Entfernung von Hydroxylgruppen aus mindestens einem Diol eines Molekulargewichtes von weniger als 250 zurückbleibt, wobei mindestens 80 Mol-% der verwendeten Dicarbonsäure aus Terephthalsäure oder ihren esterbildenden Äquivalenten und mindestens 80 Mol-% des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildende Äquivalente darstellt, und des Diols mit einem kleineren Molekulargewicht, das kein 1,4-Butandiol oder dessen esterbildende Äquivalente darstellt, höchstens 20 % beträgt und die kurzkettigen Estereinheiten 40 bis 80 Gew.-% des Copolyetheresters betragen können.

2. Verfahren gemäß Anspruch 1, **dadurch gekennzeichnet, daß** man als Substrat (a) ein textiles Obermaterial, einen Textilträger wie ein Vlies oder eine Wirkware oder einen Futterstoff einsetzt.

3. Verfahren gemäß Anspruch 1 oder 2, **dadurch gekennzeichnet, daß** man die Folie (d) auf beiden Seiten über haftvermittelnde Folien (c) an mindestens ein Substrat (a) mittels eines Schmelzklebers (b) verklebt.

4. Verfahren gemäß einem der Ansprüche 1 bis 3, **dadurch gekennzeichnet, daß** man für den Copolyesterteil der Folie (c) oder als zulaminierte Copolyesterfolie (c) einen Schmelzkleber auf Basis hydrophiler Copolyetherester mit einem Schmelzpunkt von mindestens 150° C einsetzt.

5. Verfahren gemäß einem der Ansprüche 1 bis 4, **dadurch gekennzeichnet, daß** man das Laminat (e) mit dem Substrat (a) mittels eines Schmelzklebers auf Basis eines modifizierten Polybutylenterephthalats verklebt.

6. Verfahren gemäß Anspruch 5, **dadurch gekennzeichnet, daß** man das mindestens eine Substrat (a) mit dem Laminat (e) punktförmig mittels Pastenpunktauftrages oder Pulverpunktauftrages oder Streuauftrages verklebt.

7. Verfahren gemäß einem der vorhergehenden Ansprüche 1 bis 6, **dadurch gekennzeichnet, daß** man als Substrat (a) ein Substrat auswählt, das ein Gewebe oder Gewirke aus unverstreckten oder teilverstreckten Endlosfäden aus Polyester ist.

8. Textilverbund, enthaltend mindestens ein Substrat (a) aus einem Gewebe oder Gewirke und einer wasserundurchlässigen, wasserdampfdurchlässigen Folie (d) in Kombination mit mindestens einer Copolyesterfolie (c) aus einem Schmelzkleber auf Basis hydrophiler Copolyetherester in Form eines Laminats (e), herstellbar gemäß einem Verfahren gemäß einem der vorhergehenden Ansprüche 1 bis 7.

9. Verwendung eines Textilverbunds nach Anspruch 8 zur Herstellung von Wetterschutzbekleidung, wasserdichten Zelten, Schuhen oder Handschuhen, welche eine Außenschicht, eine Funktionsschicht und eine Innenschicht aufweisen, wobei das Laminat (e) als Funktionsschicht dient.

## Claims

1. A method for producing a wash-resistant bond between a film (d) waterproof and permeable to water vapour, based on copolyetherester and at least one substrate (a) based on polyester of a woven fabric or knitted or crocheted fabric to achieve a bonded fabric of homogeneous categories having a wash resistance for washing for at least five times at 60°C **characterized in that** said film (d) waterproof and permeable to water vapour, based on copolyetherester is processed with at least one copolyester film (c) of a hot-melt adhesive based on hydrophilic copolyetherester into a laminate (e) before being bonded to said substrate (a), and this laminate (e) is bonded to said substrate (a) by means of a hot-melt adhesive (b) based on copolyester having a maximum application temperature of 140°C and
wherein a film of a hot-melt adhesive having a melting point of 90-190°C based on hydrophilic copolyetheresters is selected as copolyester part of said film (c) or as laminated copolyester film (c), wherein terephthalic acid as only acid component is used as components for this copolyetherester, and the molar amount thereof based on the whole acid amount is 100 mole-%, and a combination of butanediol, diethyleneglycol, and/or triethyleneglycol is used as diol component, said amount of butanediol being less than 75 mole-%, said amount of diethyleneglycol being between 5 and 60 mole-%, said amount of triethyleneglycol being between 0 and 40 mole-% and at least 2 to 10 mole-% of a higher molecular polyethyleneglycol being present having a molecular weight of 600 to 4000 g/mol based on the whole amount of acid and the whole amount of diol of 100 mole-%, and
wherein copolyetheresters consisting of a plurality of recurring intralinear long-chain and short-chain ester units linked statistically via ester linkages by head to tail are selected as said copolyetherester for said film (d) waterproof and permeable to water vapour or membrane, and said long-chain ester units corresponding to formula 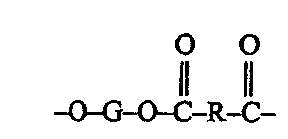 and said short-chain ester units corresponding to formula 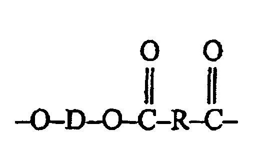 wherein
G represents a bivalent residue retained after removal of terminal hydroxyl groups from at least one long-chain glycol having an average molecular weight of 600 to 6000 and an atomic ratio of carbon to oxygen between 2.0 and 4.3,
wherein at least 20 wt.-% of said long-chain glycol have an atomic ratio of carbon to oxygen between 2.0 and 2.4 and constitute 15 to 50 wt.-% of said copolyetherester,
R represents a bivalent residue remaining after removal of carboxyl groups from at least one dicarboxylic acid of a molecular weight of less than 300, and
D represents a bivalent residue remaining after removal of hydroxyl groups from at least one diol of a molecular weight of less than 250,
wherein at least 80 mole% of dicarboxylic acid used consist of terephthalic acid or ester-forming equivalents thereof and at least 80 mole-% of said diol having said low molecular weight consist of 1,4-butanediol or ester-forming equivalents thereof, and
wherein the sum of mole percentages of said dicarboxylic acid which does not represent terephthalic acid or ester-forming equivalents thereof and of said diol having a lower molecular weight which does not represent 1,4-butanediol or ester-forming equivalents thereof amounts to not more than 20 %, and
wherein said short-chain ester units can amount to 40 to 80 wt.-% of said copolyetherester.

2. The method according to claim 1, **characterized in that** a textile upper material, a textile backing such as a non-woven fabric or a knitted or crocheted fabric or a lining is used as substrate (a).

3. The method according to claim 1 or 2, **characterized in that** said film (d) is bonded on both sides via coupling films (c) to at least one substrate (a) via a hot-melt adhesive (b).

4. The method according to one of claims 1 to 3, **characterized in that** a hot-melt adhesive based on hydrophilic copolyetheresters having a melting point of at least 150°C is used as copolyester part of said film (c) or as laminated copolyester film (c).

5. The method according to one of claims 1 to 4, **characterized in that** said laminate (e) is bonded to said substrate (a) via a hot-melt adhesive based on a modified polybutyleneterephthalate.

6. The method according to claim 5, **characterized in that** said at least one substrate (a) is punctually bonded to said laminate (e) via a paste dot application or a powder dot application or dispersion application.

7. The method according to one of the preceding claims 1 to 6, **characterized in that** a substrate being a woven fabric or knitted or crocheted fabric of non-drawn or partial-drawn polyester filament yarns is selected as substrate (a).

8. A bonded fabric comprising at least one substrate (a) of a woven fabric or knitted or crocheted fabric and of a film (d) waterproof and permeable to water vapour in combination with at least one copolyester film (c) of a hot-melt adhesive based on hydrophilic copolyetheresters in form of a laminate (e) fabricable according to a method according to one of the preceding claims 1 to 7.

9. Use of a bonded fabric according to claim 8 for producing weather protective clothing, waterproof tents, shoes or gloves having an outer layer, a functional layer and an inner layer, wherein said laminate (e) serves as functional layer.

## Revendications

1. Procédé de production d'un collage résistant au lavage, entre une feuille imperméable à l'eau et perméable à la vapeur d'eau à base de copolyétherester (d) et au moins un substrat (a) à base de polyester constitué d'un tissu ou d'un tricot pour obtenir un composite textile pur présentant une résistance au lavage à 60° C sur au moins cinq lavages, **caractérisé en ce que**, avant le collage avec le substrat (a), la feuille imperméable à l'eau et perméable à la vapeur d'eau à base de copolyétherester (d) est traitée avec au moins une feuille de copolyester d'un adhésif thermofusible à base de copolyétherester hydrophile (c) d'un stratifié (e), et ce stratifié (e) est collé avec le substrat (a) à l'aide d'un adhésif thermofusible à base de copolyester (b), qui présente une température d'utilisation maximale de 140° C,
dans lequel on choisit comme partie de copolyester de la feuille (c) ou comme feuille de copolyester laminée (c), une feuille d'un adhésif thermofusible présentant un point de fusion de 90 à 190° C à base de copolyétherester hydrophile, en utilisant comme éléments constitutifs de ce copolyétherester, de l'acide téréphtalique comme composant acide unique et dont la proportion molaire par rapport à la quantité totale d'acide, se situe à 100 % en moles, et en utilisant comme composants diol, une combinaison de butane-diol, de diéthylène-glycol et/ou de triéthylène-glycol, la teneur en butane-diol étant inférieure à 75 % en moles, la proportion de diéthylène-glycol se situant entre 5 et 60 % en moles, la proportion de triéthylène-glycol se situant entre 0 et 40 % en moles et présentant au moins 2 à 10 % en moles d'un polyéthylène-glycol de poids moléculaire supérieur, et comportant une masse molaire de 600 à 4000 g/mole, par rapport à la quantité totale d'acide et la quantité totale de diols de 100 % en moles,
dans lequel on choisit comme copolyétherester pour la feuille (d) ou membrane ou imperméable à l'eau et perméable à la vapeur d'eau, un copolyétherester qui est constitué d'une multiplicité de motifs ester répétitifs à longues chaînes et à chaînes courtes intralinéaires qui sont reliés de manière statique par des liaisons ester tête à queue, les motifs esters à chaîne longue correspondant à la formule 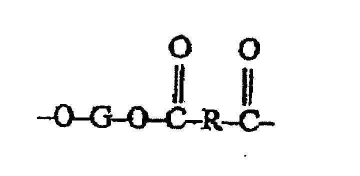 et les motifs esters à chaîne courte correspondant à la formule 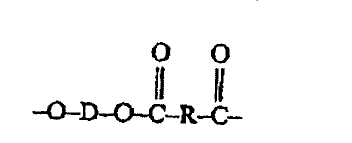
G représentant un radical bivalent conservant après élimination des groupes hydroxyles développés à partir d'au moins un glycol à chaîne longue, un poids moléculaire moyen de 600 à 6000 et un rapport atomique du carbone à l'oxygène entre 2,0 et 4,3, où au moins 20 % en poids du glycol à longue chaîne possèdent un rapport atomique du carbone à l'oxygène entre 2,0 et 2,4 et constituent 15 à 50 % en poids du copolyétherester,
R représentant un radical bivalent qui, après élimination des groupes carboxyles, reste constitué d'au moins un acide dicarboxylique d'un poids moléculaire inférieur à 300, et
D représentant un radical bivalent qui, après élimination des groupes hydroxyles, reste constitué d'au moins un diol d'un poids moléculaire inférieur à 250, au moins 80 % en moles de l'acide dicarboxylique utilisé étant constitués d'acide téréphtalique ou de leurs équivalents formant des esters et constitués d'au moins 80 % en moles du diol présentant un poids moléculaire bas du 1,4-butane-diol ou de ses équivalents formant des esters, la somme des pourcentages en moles de l'acide dicarboxylique qui ne représente pas d'acide téréphtalique ou ses équivalents formant des esters et du diol présentant un poids moléculaire inférieur qui ne constitue pas le 1,4-butaned-iol ou ses équivalents formant des esters, est de 20 % au maximum et les motifs esters à chaîne courte peuvent constituer 40 à 80 % en poids du copolyétherester.

2. Procédé selon la revendication 1, **caractérisé en ce que** l'on utilise comme substrat (a), un matériau de revêtement textile, un support textile tel qu'un feutre ou un tricot ou une doublure.

3. Procédé selon la revendication 1 ou 2, **caractérisé en ce que** l'on colle la feuille (d) sur les deux côtés par des feuilles servant d'adhésif (c) sur au moins un substrat (a) au moyen d'un adhésif thermofusible (b).

4. Procédé selon l'une quelconque des revendications 1 à 3, **caractérisé en ce que** l'on utilise pour la partie de copolyester de la feuille (c) ou comme feuille de copolyester (c) laminée, un adhésif thermofusible à base de copolyétherester hydrophile présentant un point de fusion d'au moins 150° C.

5. Procédé selon l'une quelconque des revendications 1 à 4, **caractérisé en ce que** l'on colle le stratifié (e) avec le substrat (a) au moyen d'un adhésif thermofusible à base de polybutylène-téréphtalate modifié.

6. Procédé selon la revendication 5, **caractérisé en ce que** l'on colle au moins un substrat (a) avec le stratifié (e) par points, par l'application de points de pâte ou l'application de points de poudre ou l'application dispersée.

7. Procédé selon l'une quelconque des revendications 1 à 6 précédentes, **caractérisé en ce que** l'on choisit comme substrat (a) un substrat qui est un tissu ou un tricot de fils continu de polyester non étiré ou partiellement étiré.

8. Composite textile contenant au moins un substrat (a) constitué d'un tissu ou d'un tricot et d'une feuille imperméable à l'eau, perméable à la vapeur d'eau (d) en combinaison avec au moins une feuille de copolyester (c) d'un adhésif thermofusible à base de copolyétherester hydrophile sous la forme d'un stratifié (e), pouvant être produit selon un procédé selon l'une quelconque des revendications 1 à 7 précédentes.

9. Utilisation d'un composite textile selon la revendication 8 pour la production de vêtements de protection contre les intempéries, de tentes, de chaussures ou de gants imperméables présentant une couche extérieure, une couche fonctionnelle et une couche intérieure, le stratifié (e) servant de couche fonctionnelle.
